# EUROPEAN PATENT APPLICATION

(11) **EP 3 177 085 A1**
(43) Date of publication of application: **07.06.2017**
(21) Application number: 15828007.3
(22) Date of filing: 29.07.2015
(51) Int. Cl.: H04W 56/00, H04W 72/04

(54) **USER DEVICE AND UPLINK TRANSMISSION TIMING CONTROL METHOD**

(30) Priority: 31.07.2014 JP 2014157065
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); HAPSARI, Wuri Andarmawanti, Tokyo 100-6150 (JP); TAKEDA, Kazuki, Tokyo 100-6150 (JP)
(74) Representative: Hoffmann Eitle
(86) International application number: PCT/JP2015/071555
(87) International publication number: WO 2016/017717

(57) **Abstract**

A user apparatus including: a signal transmission unit configured to transmit an uplink signal; a signal reception unit configured to receive a downlink signal; and a timing adjustment unit configured to perform timing control for shifting forward transmission timing of the uplink signal on the basis of reception timing of the downlink signal, wherein, when there is a secondary cell to which a physical uplink control channel is set in a cell group including secondary cells using a same uplink transmission timing in cells used for the carrier aggregation, the timing adjustment unit performs the timing control on the cell group by using an offset value according to a frame structure of the secondary cell.

## Description

### TECHNICAL FIELD

The present invention relates to a mobile communication system. More particularly, the present invention relates to uplink transmission timing control in carrier aggregation.

### BACKGROUND ART

In LTE-Advanced, in order to keep backward compatibility with LTE and to realize a throughput higher than LTE, carrier aggregation (CA) for performing communication by simultaneously using a plurality of carries is adopted, in which bandwidths (20 MHz at the maximum) supported in LTE are used as basic units (refer to non-patent document 1, for example). In carrier aggregation, a carrier which is a basic unit is called a component carrier (CC).

When CA is performed, a PCell (Primary cell) that is a reliable cell for ensuring connectivity and an SCell (Secondary cell) that is an appendant cell are set for the user apparatus UE. The user apparatus UE connects to a PCell first, and then, an SCell can be added as necessary. The PCell is a cell similar to a cell, in the LTE scheme, for supporting RLM (Radio Link Monitoring) and SPS (Semi-Persistent Scheduling) and the like.

The SCell is a cell which is set in the user apparatus UE by being added to the PCell. Addition, configuration change and deletion can be performed by RRC (Radio Resource Control) signaling. Since SCell is in an deactivated state right after it is set in the user apparatus UE, communication becomes available (scheduling becomes available) only by activating it in a MAC (Media Access Control) layer. Activation/deactivation of the SCell is controlled by a MAC signal from the base station eNB.

In CA up to Rel-11 of LTE, simultaneous communication is performed using a plurality of CCs under the same base station eNB. In Rel-12, this is further expanded so that Dual connectivity is proposed in which simultaneous communication is performed by using CCs under different base stations eNB to realize high throughputs (non-patent document 2). That is, in Dual connectivity, the user apparatus UE performs communication simultaneously using radio resources of two physically different base stations eNB.

Dual connectivity (to be referred to as DC hereinafter) is a kind of CA, and it is also referred to as Inter eNB CA (inter base station carrier aggregation). In DC, Master-eNB(MeNB) and Secondary-eNB(SeNB) are introduced.

In DC, cell(s) (one or a plurality of cells) under an MeNB is called MCG (Master Cell Group), and cell(s) (one or a plurality of cells) under an SeNB is called SCG (Secondary Cell Group). An UL CC is set in at least one SCell in an SCG, and PUCCH is set in one of the SCells. The SCell is called PSCell (primary SCell). Also, this may be called a special cell.

By the way, in the LTE system in which SC-FDMA is adopted for uplink transmission, the base station eNB performs FFT on uplink signals, in a lump, received from different user apparatuses UE in the cell for signal demodulation. However, signal propagation delay (radio characteristics) of each user apparatus UE is different. Thus, if each user apparatus UE in the cell transmits an uplink signal in accordance with reception timing of a downlink signal, the base station eNB receives uplink signals of each user apparatus UE in different timing. Therefore, the base station eNB cannot perform FFT at desired timing. Thus, the base station eNB adjusts transmission timing of uplink signals of each user apparatus UE to perform control such that shift of reception timing at the base station eNB falls within a predetermined time. This is called TA (Time alignment) control. More specifically, the base station eNB measures a difference of reception timing of an actual uplink signal with respect to a desired uplink signal reception timing for each user apparatus, and sends instruction to shift uplink signal timing forward by the difference. An uplink transmission timing adjustment instruction from the base station eNB can be transmitted by a random access procedure or a MAC control signal or the like.

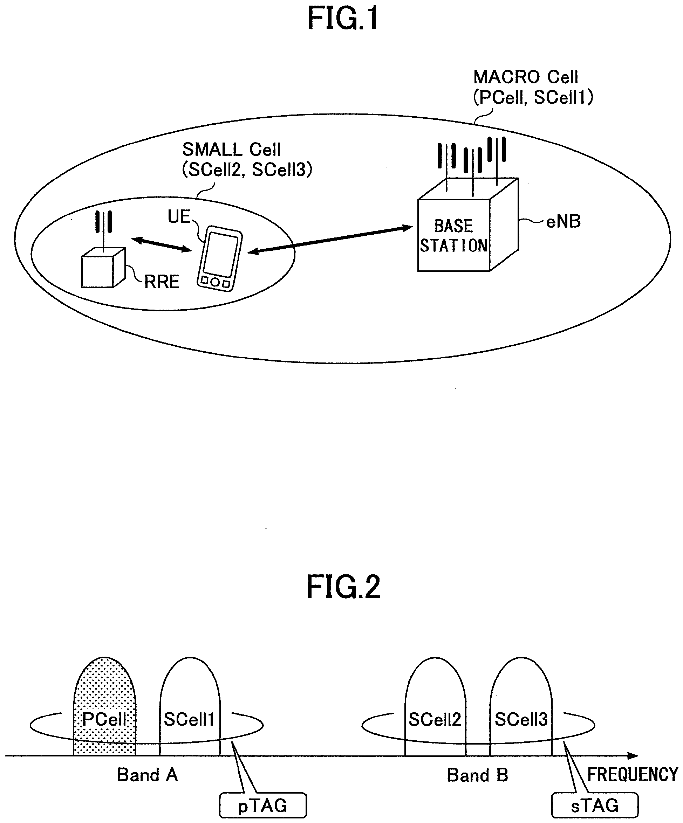

As a form of CA, as exemplary shown in Fig. 1, there is a form in which CA is operated between a macro cell and a small cell of different frequencies. In the system shown in Fig. 1, the base station eNB forms a PCell and an SCell1 as macro cells, and further, forms an SCell2 and an SCell3 that are small cells by using an RRE (Remote Radio Equipment) so that a user apparatus UE performs CA.

In such a configuration, radio characteristics of propagation delay and the like are different between CCs that the user apparatus UE aggregates. Thus, even though uplink transmission timing control is performed in units of UEs, misalignment of reception timing occurs at the base station eNB, which causes inter-cell interference. Thus, it is necessary to perform uplink transmission timing control for each CC.

More specifically, in Rel-11, CCs (cells) configured in the user apparatus UE are divided into groups each having almost the same radio characteristics, so that uplink transmission timing adjustment control is performed for each CC (cell) group (TAG: Timing Advance Group). That is, a TAG is a group of cells using the same uplink transmission timing. The "same uplink transmission timing" does not necessarily mean strictly the same. When uplink timing difference between cells falls within a predetermined range, it can be regarded as "the same uplink transmission timing". TAGs are classified roughly into a pTAG (primary TAG) including a PCell and an sTAG (secondary TAG) formed only by SCells without including a PCell. In the configuration of Fig. 1, the user apparatus UE is configured with, for example, as shown in Fig. 2, a pTAG including a PCell and an SCell1, and an sTAG including an SCell2 and an SCell3.

Also, in the TAG, a timing reference cell is defined as a cell of DL that is referred to when adjusting DL timing or a clock in the apparatus (for example, non-patent document 1). It is defined that, as shown in Figs. 3A, B, each cell in a pTAG refers to the PCell as a timing reference cell, and as for each SCell on the sTAG, the user apparatus UE autonomously selects a timing reference cell.

### RELATED ART DOCUMENT

### [PATENT DOCUMENT]

[NON PATENT DOCUMENT 1] 3GPP TS 36.300 V12.1.0 (2014-03)
[NON PATENT DOCUMENT 2] 3GPP TR 36.842 V12.0.0 (2013-12)
[NON PATENT DOCUMENT 3] 3GPP TS 36.213 V12.2.0 (2014-06)
[NON PATENT DOCUMENT 4] 3GPP TS 36.211 V12.2.0 (2014-06)

### SUMMARY OF THE INVENTION

### PROBLEM TO BE SOLVED BY THE INVENTION

In LTE, two duplex modes are defined, which are a Frequency Division Duplex (FDD) scheme and a Time Division Duplex (TDD) scheme. In the FDD scheme, uplink communication and downlink communication are performed using frequency bands which are different with each other. In the TDD scheme, the same frequency band is used for uplink communication and downlink communication in which uplink communication and downlink communication are separated by time.

As to CA and duplex modes, in Rel.10-11 of LTE, a plurality of CCs that form CA are limited to the same duplex mode. However, in Rel-12, CA is expanded so that it is possible to perform CA using CCs of different duplex modes. Hereinafter, CA using CCs of different duplex modes is referred to as "TDD-FDD CA".

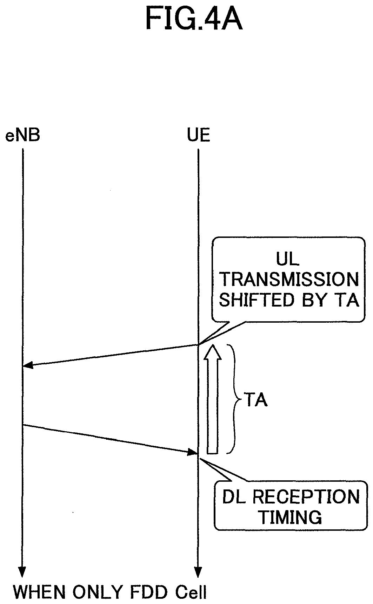

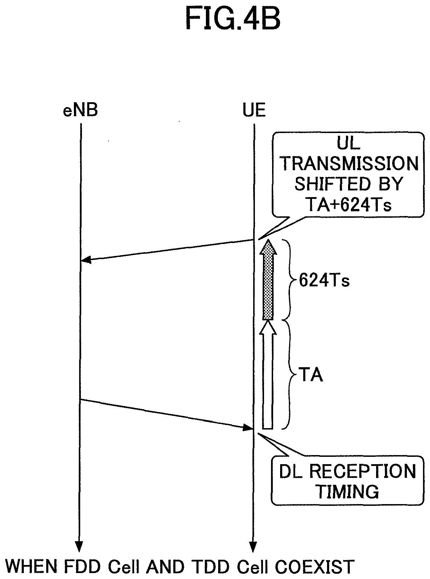

In conventional TDD-FDD CA, it is defined that, in a case where an SCell having a frame structure (duplex mode) that is different from others' frame structure is included in an sTAG, UL transmission timing is always shifted forward by NTAoffset = 624Ts (non-patent document 3). As described in the non-patent document 4, a carrier having the frame structure type 1 corresponds to a carrier of FDD, and a carrier having the frame structure type 2 corresponds to a carrier of TDD. Fig. 4A is a diagram showing TA when an SCell having different frame structure (duplex mode) is not included in the sTAG, that is, for example, when only SCells of FDD are included. As shown in Fig. 4A, in the sTAG, UL signal transmission timing is set as a time earlier than DL signal reception timing by TA. Fig. 4B shows a case where an SCell having different frame structure (duplex mode) is included in an sTAG. In this case, in the sTAG, UL signal transmission timing is set as a time earlier than DL reception timing by TA+624Ts. By the way, UL transmission timing applying NTAoffset is described in 8.1 Uplink-downlink frame timing of the non-patent document 4.

The reason for performing the above-mentioned control is that, since NTAoffset that should be applied is different depending on duplex mode (it is 0 for FDD, 624Ts for TDD), it is necessary to use either one of them in the same sTAG. By the way, Ts is a predetermined time. Also, the reason for adding 624Ts in TDD is that a time for switching between UL reception and DL transmission is considered in the base station eNB.

However, in the above-mentioned conventional technique, activation/deactivation of an SCell in an sTAG, and presence or absence of UL CC setting are not considered. Thus, for example, when all of TDD SCells in the sTAG are deactivated or when UL CC is deleted, it can be assumed that the user apparatus UE autonomously stops the forward shift of TA. Since such control depends on implementation of user apparatuses UE, it can be considered that another user apparatus UE does not perform such control. Since the base station eNB cannot expect that such control is performed, when such control is performed, misalignment of UL transmission timing occurs so that UL interference may occur. That is, in the conventional technique, there is a problem in that, in uplink signal transmission timing control of a user apparatus UE, since an offset value cannot be applied properly, UL interference may occur.

Also, the before-mentioned DC is a kind of CA, in which a PCell and an SCell are set, and a pTAG and an sTAG are set. Thus, it can be considered that the user apparatus UE performs control to always shift the UL transmission timing forward by NTAoffset=624Ts when the sTAG includes an SCell having a frame structure (duplex mode) different from that of others as defined in the above mentioned standard. However, as described before, since activation/deactivation of an SCell in an sTAG, and presence or absence of UL CC setting are not considered, there is a problem similar to that described above.

To solve the above-mentioned problem, for example, it can be considered to define conditions of an activation state or UL CC setting or the like for applying NTAoffset=624Ts. However, in DC, it is agreed to set PSCell in an sTAG as a DL timing reference cell. Thus, presuming that agreement, it can be considered that the user apparatus UE applies NTAoffset according to duplex mode of PSCell. That is, in this case, the user apparatus UE applies NTAoffset=624Ts in TA control when PSCell is TDD, and applies NTAoffset=0 when PSCell is FDD.

In a NW in which TDD-FDD CA is always performed with DC, complexity of apparatus implementation increases if an NTAoffset value is determined by determining whether an SCell having a different frame structure is set or not for the sTAG including PSCell, even though the NTAoffset could have been determined based on the duplex mode of PSCell. That is, also in DC, there is a problem in that an offset value cannot be properly applied in transmission timing control of an uplink signal of the user apparatus UE.

The present invention is contrived in view of the above-mentioned points, and an object of the present invention is to provide a technique to enable to properly apply an offset value, in uplink signal transmission timing control of a user apparatus including a function for performing communication with another communication apparatus by carrier aggregation using a carrier having a particular frame structure and a carrier having a frame structure different from the particular frame structure.

### MEANS FOR SOLVING THE PROBLEM

According to an embodiment of the present invention, there is provided a user apparatus including a function configured to perform communication with another communication apparatus by carrier aggregation using a carrier having a particular frame structure and a carrier having a frame structure different from the particular frame structure, including:
a signal transmission unit configured to transmit an uplink signal to the communication apparatus;
a signal reception unit configured to receive a downlink signal from the communication apparatus; and
a timing adjustment unit configured to perform timing control for shifting forward transmission timing of the uplink signal to the communication apparatus transmitted from the signal transmission unit on the basis of reception timing of the downlink signal from the communication apparatus received by the signal reception unit,
wherein, when there is a secondary cell to which a physical uplink control channel is set in a cell group including secondary cells using a same uplink transmission timing in cells used for the carrier aggregation, the timing adjustment unit performs the timing control on the cell group by using an offset value according to a frame structure of the secondary cell.

Also, according to an embodiment of the present invention, there is provided an uplink transmission timing control method executed by a user apparatus including a function configured to perform communication with another communication apparatus by carrier aggregation using a carrier having a particular frame structure and a carrier having a frame structure different from the particular frame structure, including:
a timing adjustment step of performing timing control for shifting forward transmission timing of an uplink signal to the communication apparatus on the basis of reception timing of a downlink signal from the communication apparatus,
wherein, in the timing adjustment step, when there is a secondary cell to which a physical uplink control channel is set in a cell group including secondary cells using a same uplink transmission timing in cells used for the carrier aggregation, the user apparatus performs the timing control on the cell group by using an offset value according to a frame structure of the secondary cell.

### EFFECT OF THE PRESENT INVENTION

According to an embodiment of the present invention, it becomes possible to properly apply an offset value, in uplink signal transmission timing control of a user apparatus including a function for performing communication with another communication apparatus by carrier aggregation using a carrier having a particular frame structure and a carrier having a frame structure different from the particular frame structure.

### BRIEF DESCRIPTION OF THE DRAWINGS

Fig. 1 is a diagram for explaining MTA;
Fig. 2 is a diagram for explaining TAG;

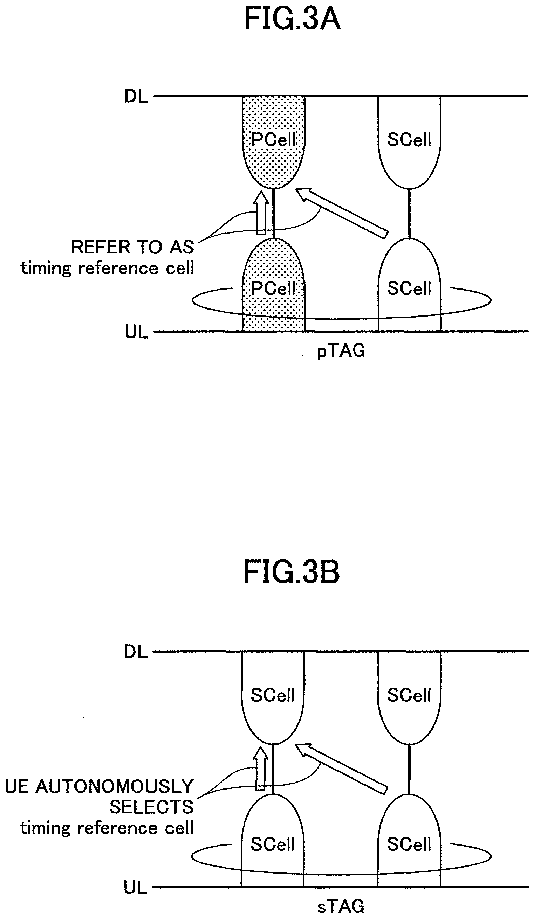

Fig. 3A is a diagram for explaining timing reference cell;
Fig. 3B is a diagram for explaining timing reference cell;
Fig. 4A is a diagram for explaining a problem;
Fig. 4B is a diagram for explaining a problem;
Fig. 5 is a block diagram of a communication system in an embodiment of the present invention;
Fig. 6A is a diagram for explaining an application example of NTAoffset;
Fig. 6B is a diagram for explaining an application example of NTAoffset;
Fig. 7A is a diagram for explaining a condition example 2 for applying NTAoffset=624Ts;
Fig. 7B is a diagram for explaining a condition example 2 for applying NTAoffset=624Ts;
Fig. 8A is a diagram for explaining a condition example 3 for applying NTAoffset=624Ts;
Fig. 8B is a diagram for explaining a condition example 3 for applying NTAoffset=624Ts;
Fig. 9A is a diagram for explaining a condition example 4 for applying NTAoffset=624Ts;
Fig. 9B is a diagram for explaining a condition example 4 for applying NTAoffset=624Ts;
Fig. 10 is a diagram showing an example for reporting that NTAoffset=624Ts is applied;
Fig. 11 is a block diagram of a communication system in a modified example 1;
Fig. 12A is a diagram for explaining an application example of NTAoffset in the modified example 1;
Fig. 12B is a diagram for explaining an application example of NTAoffset in the modified example 1;
Fig. 13A is a block diagram of a communication system in a modified example 2;
Fig. 13B is a block diagram of a communication system in a modified example 2;
Fig. 14 is a block diagram of a user apparatus UE in an embodiment of the present invention;
Fig. 15 is a diagram showing an operation example of the user apparatus UE;
Fig. 16 is a diagram showing an operation example of the user apparatus UE;
Fig. 17 is a diagram showing an operation example of the user apparatus UE.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below. Although the present embodiment is targeted for a mobile communication system of LTE, the present invention can be applied not only to LTE but also to other mobile communication systems. Also, in the specification and the claims, the term "LTE" is used to mean Rel-12 of 3GPP, or schemes after Rel-12 unless otherwise stated.

### (Outline of embodiment, whole configuration of the system)

In the present embodiment, when performing TDD-FDD CA in DC, as to an sTAG including PSCell, NTAoffset according to duplex mode of PSCell is applied. As to an sTAG that does not include PSCell, control described later is applied. TDD-FDD CA in DC is an example of carrier aggregation using a carrier of a time division duplex scheme and a carrier of a frequency division duplex scheme.

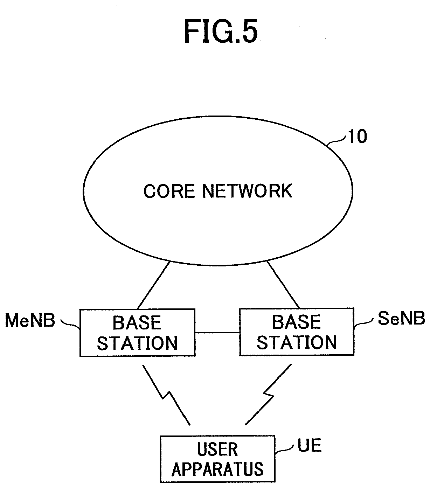

Fig. 5 shows a configuration example of a communication system in an embodiment of the present invention. As shown in Fig. 5, the communication system of the present embodiment includes a base station MeNB and a base station SeNB each connected to a core network 10, which enables Dual connectivity (DC) with the user apparatus UE. Also, communication is available between the base station MeNB and the base station SeNb by an X2 interface, for example.

In the communication system shown in Fig.5, a PCell and an SCell (including PSCell) can be set, for example, by using an MCG as a macro cell and an SCG as a small cell like the form shown in Fig. 1. Addition, deletion, configuration change of SCells (including PSCell) in the user apparatus UE is performed by an RRC signaling from the base station MeNB, which is not limited to this.

Also, as to activation/deactivation of an SCell, it may be performed by the base station SeNB for the SCG, and it may be performed by the base station MeNB for the MCG, or, it may be performed by the base station MeNB for all SCells.

The user apparatus UE ascertains TA for TAGs by a MAC signal received from MeNB or SeNB so as to perform adjustment of UL transmission timing for each TAG by using the TA and NTAoffset. The present embodiment especially focuses on determination of NTAoffset.

### (Example of a case where PSCell is included in sTAG)

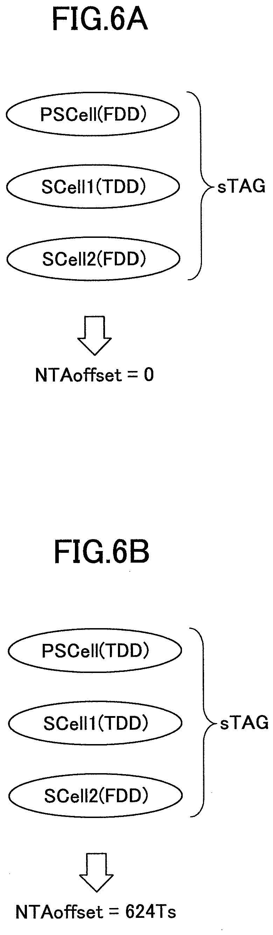

An application example of NTAoffset in a case where a PSCell is included in an sTAG is described with reference to Figs. 6A and 6B. As a configuration of the sTAG in a case where a PSCell is included in the sTAG, there are cases where the sTAG includes only an SCell of an SCG (SeNB) other than the PSCell, where the sTAG includes only an SCell of an MCG (MeNB) other than the PSCell, and where the sTAG includes only an SCell of an SCG (SeNB) and an SCell of an MCG (MeNB) other than the PSCell, and the like.

Fig. 6A shows that a PSCell(FDD), an SCell1(TDD) and an SCell2(FDD) are set in the user apparatus UE as an sTAG. In this case, since the PSCell is FDD, NTAoffset for FDD is applied for the sTAG. That is, NTAoffset=0 is applied.

Fig. 6B shows that, a PSCell(TDD), an SCell1(TDD) and an SCell2(FDD) are set in the user apparatus UE as an sTAG. In this case, since the PSCell is TDD, NTAoffset for TDD is applied for the sTAG. That is, NTAoffset=624Ts is applied.

### (Example in a case where PSCell is not included in sTAG)

Although the above-mentioned example is an example in which a PSCell is included in an sTAG, there is also a case where no PSCell is included in an sTAG in DC. For example, such cases are cases where an sTAG is formed by SCells in an MCG, where an sTAG is formed by SCells other than PSCell in an SCG, where an sTAG is formed by an SCell of an MCG and an SCell (not including PSCell) of an SCG, and the like. In this case, as described before, in the conventional technique, since SCell activation/deactivation, and presence or absence of CC setting are not considered, a problem such as UL interference or the like may occur. Thus, in the present embodiment, following control is performed. Control that is described below can be also applied similarly to CA, as shown in Fig. 1, which is not a DC. Also, "base station eNB" in the following DC is an MeNB or an SeNB that forms an SCell included in the sTAG, and that receives an uplink signal from a user apparatus UE.

In the present embodiment, when a cell of a frame structure (duplex mode) different from that of other cells is set in the same sTAG (that is, when FDD and TDD coexist in SCells that form the sTAG), the user apparatus UE applies NTAoffset=624Ts based on the following conditions (condition example 1 - condition example 4), and the base station eNB performs reception operation and generation/transmission of a TA command by assuming that UL transmission is performed with application of NTAoffset=624Ts based on the conditions.

### <Condition example 1>

In the condition example 1, when a cell of a duplex mode different from that of other cells is set in the same sTAG, 624Ts is applied irrespective of presence or absence of an UL CC of each SCell, and irrespective of activation/deactivation state. For example, in a case where an SCell1(TDD), an SCell2(FDD) and an SCell3(FDD) are set in the user apparatus UE as an sTAG, the user apparatus UE applies NTAoffset=624Ts in UL transmission timing control in SCells included in the sTAG irrespective of presence or absence of an UL CC and activation/deactivation state in the SCells 1-3.

### <Condition example 2>

In the condition example 2, when there is an SCell of Frame structure2 (TDD) in the same sTAG, and at least one SCell in TDD SCell(s) is in an activated state, NTAoffset=624Ts is applied. In the condition example 2, presence or absence of an UL CC of the TDD SCell that is in an activated state is not used as a condition. That is, the condition example 2 is applied even when only DL CC is set in a TDD SCell in an activated state without an UL CC.

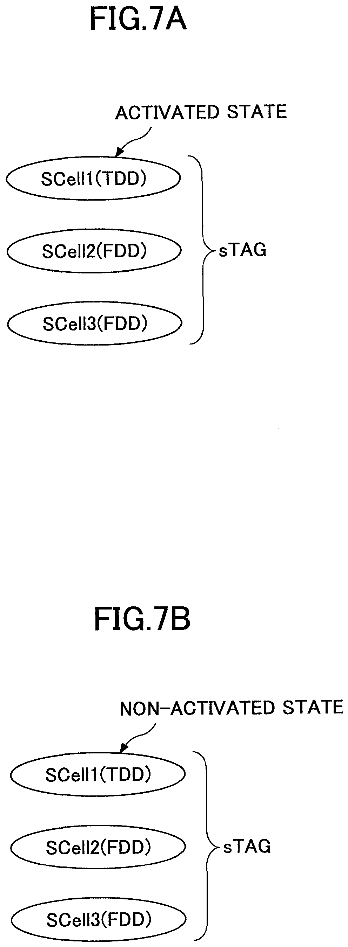

An application example in the condition example 2 is described with reference to Figs. 7A and 7B. In Fig. 7A, an SCell1(TDD), an SCell2(FDD) and an SCell3(FDD) are set as an sTAG in the user apparatus UE, and the SCell1 is in an activated state. In this case, since the condition for applying 624Ts is satisfied, NTAoffset=624Ts is applied in the sTAG.

In Fig. 7B, although an SCell1(TDD), an SCell2(FDD) and an SCell3(FDD) are set as an sTAG in the user apparatus UE, the SCell1 is in a deactivated state. In this case, since the condition for applying 624Ts is not satisfied, NTAoffset=0 is applied in the sTAG.

### <Condition example 3>

In the condition example 3, NTAoffset=624Ts is applied when there is an SCell of Frame structure2(TDD) in the same sTAG and an UL CC (uplink communication) is set in at least one SCell in the TDD SCell(s). Configuration of the UL CC for the SCell is performed by an RRC signaling, for example. When an SCell is set, DL is always set.

In the condition example 3, the activate/deactivate state of the TDD SCell in which the UL CC is set is not used as a condition. That is, the condition example 3 is applied even when the TDD SCell to which the UL CC is configured is in a deactivated state.

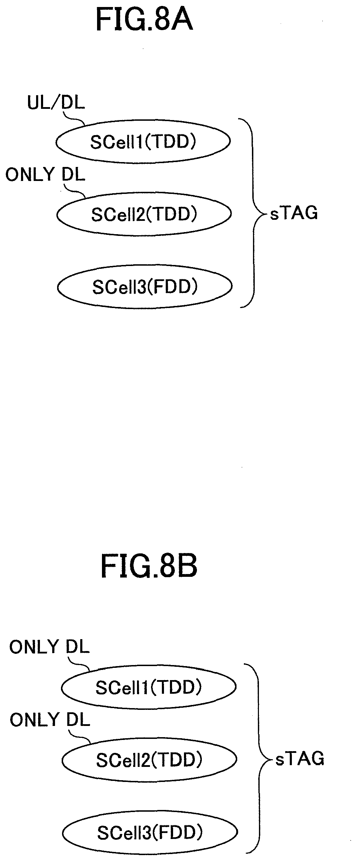

An application example in the condition example 3 is described with reference to Figs. 8A and 8B. In Fig. 8A, an SCell1(TDD), an SCell2(TDD) and an SCell3(FDD) are set as an sTAG in the user apparatus UE, and both of DL and UL are set for the SCell1. In this case, since the condition for applying 624Ts is satisfied, NTAoffset=624Ts is applied in the sTAG.

In Fig. 8B, although an SCell1(TDD), an SCell2(TDD) and an SCell3(FDD) are configured as an sTAG in the user apparatus UE, only a DL CC is configured in the TDD SCells, in which any UL CC is not set. In this case, since the condition for applying 624Ts is not satisfied, NTAoffset=0 is applied in the sTAG.

### <Condition example 4>

In the condition example 4, NTAoffset=624Ts is applied when there is an SCell of Frame structure2(TDD) in the same sTAG in the user apparatus UE, and an UL CC (uplink communication) is set in at least one SCell in the TDD SCell(s) and the SCell is in an activated state. Activation/deactivation is performed for each SCell. For example, when an SCell in which UL and DL are set is activated, both of UL and DL are activated so that communication becomes available.

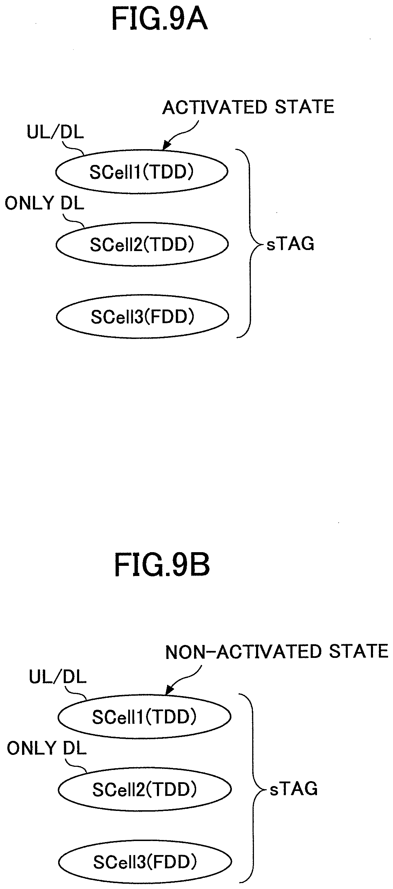

An application example in the condition example 4 is described with reference to Figs. 9A and 9B. In Fig. 9A, an SCell1(TDD), an SCell2(TDD) and an SCell3(FDD) are set as an sTAG in the user apparatus UE, and both of DL and UL are set for TDD SCell1 and the TDD SCell1 is in an activated state. In this case, since the condition for applying 624Ts is satisfied, NTAoffset=624Ts is applied in the sTAG.

In Fig. 9B, although an SCell1(TDD), an SCell2(TDD) and an SCell3(FDD) are set as an sTAG in the user apparatus UE, and the SCell1 of TDD is configured with both of DL and UL. However, the SCell1 is in a deactivated state. In this case, since the condition for applying 624Ts is not satisfied, NTAoffset=0 is applied in the sTAG.

In the present embodiment, the base station eNB (MeNB or SeNB) ascertains the same conditions, as described above, as those of the user apparatus UE side, so that the base station eNB ascertains whether NTAoffset=624Ts is applied or not for each sTAG of each user apparatus UE based on setting state and the like of SCells of each user apparatus UE managed by the base station eNB. Accordingly, the base station eNB avoids UL interference so as to be able to normally demodulate received UL signals.

Other than that the base station eNB ascertains whether NTAoffset=624Ts is applied or not by using the same conditions as those of the user apparatus UE, the user apparatus UE may explicitly notify the base station eNB of application of NTAoffset=624Ts. This notification may be also applied when the sTAG includes the PSCell.

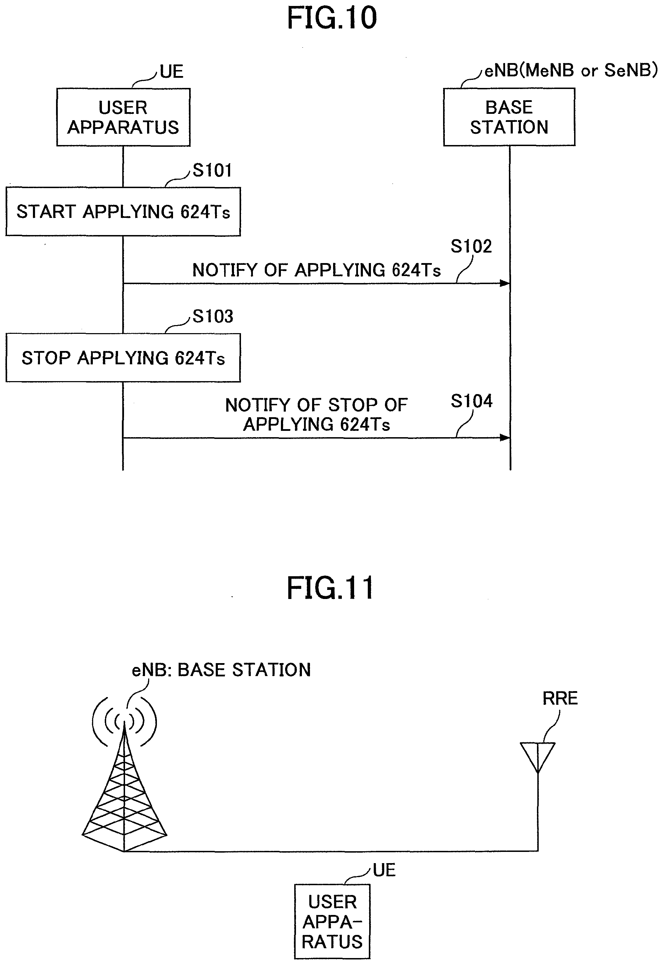

For example, as shown in Fig. 10, when the above-mentioned condition is satisfied and application of NTAoffset=624Ts is started in the sTAG (step 101), the user apparatus UE notifies the base station eNB that application of 624Ts is started (step 102). This notification includes, for example, ID of the sTAG, and information indicating that 624Ts is applied, and the like.

In the example of Fig. 10, in step 103, when the condition for applying NTAoffset=624Ts is not satisfied so that application of 624Ts stops, the user apparatus UE notifies the base station eNB of the stop of application of 624Ts (step 104). This notification includes, for example, ID of the sTAG, and information indicating that application of 624Ts is stopped, and the like.

The trigger of the notification may be application start/application stop of 624Ts as described above, or may be that a condition for applying 624Ts becomes satisfied/becomes not satisfied.

Also, the signal used for notification may be any of an RRC signal, a MAC signal, and a PHY signal. For the notification, TTT(Time To Trigger) or protection stage number may be considered for suppressing frequent reporting when satisfaction/no-satisfaction dynamically changes.

### <Other examples>

In the above-mentioned example, in the user apparatus UE and the base station eNB, applying/not-applying of NTAoffset=624Ts is determined based on a predetermined condition, or, the user apparatus UE determines applying/not-applying of NTAoffset=624Ts based on a predetermined condition, and notifies the base station eNB of applying/not-applying of NTAoffset=624Ts. When applying/not-applying of NTAoffset=624Ts changes, UL transmission may be stopped.

For example, the base station eNB performs UL signal reception control always assuming that NTAoffset=624Ts is not applied in sTAG, and the user apparatus UE stops all of UL transmissions in the sTAG when the before-mentioned condition for applying 624Ts is satisfied.

Also, for example, the base station eNB performs UL signal reception control always assuming that NTAoffset=624Ts is applied in sTAG, and the user apparatus UE stops all of UL transmissions in the sTAG when the before-mentioned condition for applying 624Ts is not satisfied.

As to stop of UL transmission, the user apparatus UE may simply stop UL transmission, may stop TA timer managed for the sTAG (or may regard TA timer is expired), may release individual resources for the SCell (SRS resource), or may deactivate all of SCells in the sTAG.

Also, the base station eNB may notify the user apparatus UE of whether to perform the above-mentioned UL transmission stop control or not by RRC signaling, MAC signaling and the like. Or, when the base station eNB notifies the user apparatus UE that the base station eNB has a before-mentioned function for determining condition of application of 624Ts, the user apparatus UE may perform application control of 624Ts according to application conditions of 624Ts, and when the base station eNB does not notify the user apparatus UE that the base station eNB has a before-mentioned function for determining condition of application of 624Ts, the user apparatus UE may perform the UL transmission stop control.

### (Modified example 1)

In the present embodiment, although DC is basically presupposed, the control method based on the duplex mode of PSCell can be applied not only to DC. For example, it is considered to introduce functions of PSCell (example: PUCCH transmission function) defined in DC into CA which is not a DC (example: Fig. 1). When the function of PSCell is introduced in CA, it is possible to perform NTAoffset control similarly to DC.

Fig. 11 shows a block diagram of a communication system of in the modified example 1. This communication system is a communication system that performs CA which is not a DC. As shown in Fig. 11, the communication system of the modified example 1 is a mobile communication system including a base station eNB and a user apparatus UE. Although Fig. 11 shows one base station eNB and one user apparatus UE, this is for convenience of drawing, and there may be a plurality of apparatuses respectively.

Also, in the example of Fig. 11, the base station eNB has a radio unit by itself. In addition to that, a radio unit (RRE: remote radio unit) is also placed at a place separated from the base station eNB. The radio unit is a part of the base station eNB, and is connected to the base station eNB by an optical fiber, for example. In the modified example 1, like the form shown in Fig. 1, CA is available by a PCell and an SCell.

In the communication system, for example, the base station eNB transmits an RRC message, to the user apparatus UE, for adding one or a plurality of SCells that form a small cell based on a measurement result of a CC for the small cell that is received from the user apparatus UE connected to a macro cell. Also, the base station eNB transmits a signal for activating an SCell to the user apparatus UE. Accordingly, the user apparatus UE performs CA with the small cell and the macro cell.

Also, for example, the user apparatus UE receives a configuration of MTA (that is, a configuration of an sTAG and a pTAG) by an RRC message received from the base station eNB, and the user apparatus UE ascertains TA for TAGs by a MAC signal so as to perform adjustment of UL transmission timing for each TAG by using the TA and NTAoffset.

In the system configuration shown in Fig. 11, by assigning a PUCCH (physical uplink control channel) resource to one SCell in SCells of a small cell communicating with the RRE, the SCell is managed as a special SCell distinguished from other SCells, so that, for the sTAG including the SCell, the value of NTAoffset is determined based on dupulex mode in the same way as the case of the above-mentioned PSCell. In the following, for convenience sake, such an SCell in CA which is not DC is to be referred to as a special SCell. As to an sTAG that does not include the special SCell, control as described so far (before-mentioned condition example 1-4 and the like) is applied.

Also, in the modified example 1, applying/not-applying of NTAoffset=624Ts may be reported to the base station eNB as described with reference to Fig. 10.

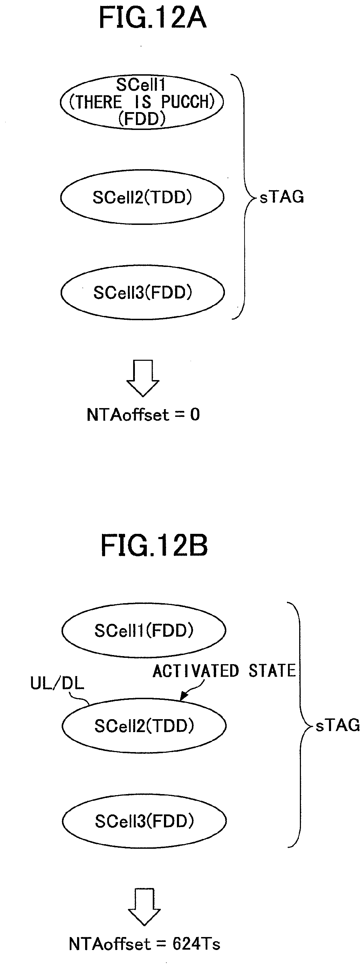

An application example of the modified example 1 in which the special SCell is applied is described with reference to Figs. 12A and 12B. In Fig. 12A, an SCelll(FDD, there is PUCCH), an SCell2(TDD), and an SCell3(FDD) are set in the user apparatus UE as an sTAG. In this case, since the SCell1 is the special SCell, NTAoffset for FDD which is the duplex mode of the special SCell is applied for the sTAG. That is, NTAoffset=0 is applied.

In Fig. 12B, an SCell1(FDD), an SCell2(TDD) and an SCell3(FDD) are set in the user apparatus UE as an sTAG. The special SCell is not set. However, the SCell2 is TDD, UL is set, and it is in an activated state. Thus, a before-mentioned condition is satisfied, so that NTAoffset=624Ts is applied.

### (Modified example 2)

In mobile communication, it is common that a user apparatus UE and a base station eNB performs communication so that communication is performed between user apparatuses UE. However, in recent years, various techniques are considered on D2D communication for performing direct communication between user apparatuses UE by using LTE radio interfaces. In the D2D communication technique, the user apparatuses UE performs direct communication by using radio resources (time-frequency resources) used in LTE communication. As D2D communication, there is a communication in which, for example, a user apparatus UE transmits (broadcasts) a discovery signal including its own identification information, then, another user apparatus UE receives the discovery signal so as to discover a user apparatus UE of a communication partner, and there is a communication (communication) to perform communication between user apparatuses UE after the discovery, and the like.

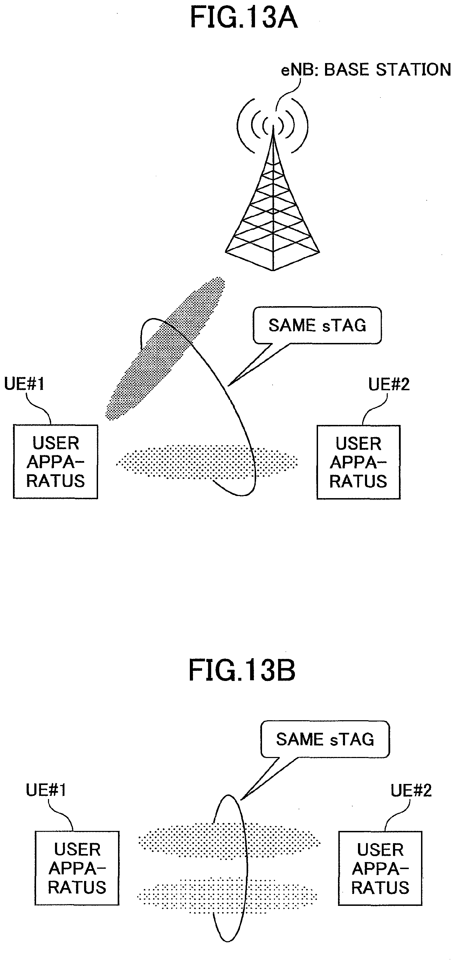

In D2D communication, it is currently assumed to perform communication using one carrier (CC). But, it is considered to expand this in the future so as to realize D2D communication using a plurality of carriers. For example, as shown in Fig. 13A, communication in which D2D communication and communication between a base station eNB and a user apparatus UE are performed at the same time can be considered. Also, as shown in Fig. 13B, communication using a plurality of carries for D2D communication can be considered.

In the communication system shown in Fig. 13A, for example, the base station eNB is regarded as a base station MeNB shown in Fig. 5 (or eNB in Fig. 11), and the user apparatus UE2 is regarded as an SeNB shown in Fig. 5 (or RRE of Fig. 11). Then, when it is assumed that the user apparatus UE1 and the base station eNB/the user apparatus UE2 perform communication similar to CA communication in the communication system of Fig. 5 (or Fig. 11), the user apparatus UE1 can determine applying/not-applying of NTAoffset=624Ts, and can apply TA control for signal transmission to a partner communication apparatus, in the same way as controls described in the embodiment (including the modified example 1) so far.

Also, in the system shown in Fig. 13B, for example, by regarding the user apparatus UE2 as a base station eNB that performs CA, when it is assumed that the user apparatus UE1 and the user apparatus UE2 perform CA communication in cells including a plurality of SCells (that can form an sTAG), the user apparatus UE1 can determine applying/not-applying of NTAoffset=624Ts, and can apply TA control, in the same way as controls described in the embodiment (including the modified example 1) so far. By the way, although 624Ts is used for NTAoffset of TDD in cellular communication, an offset value, other than 624Ts, that is separately defined may be used in D2D communication.

### (Apparatus configuration, operation example)

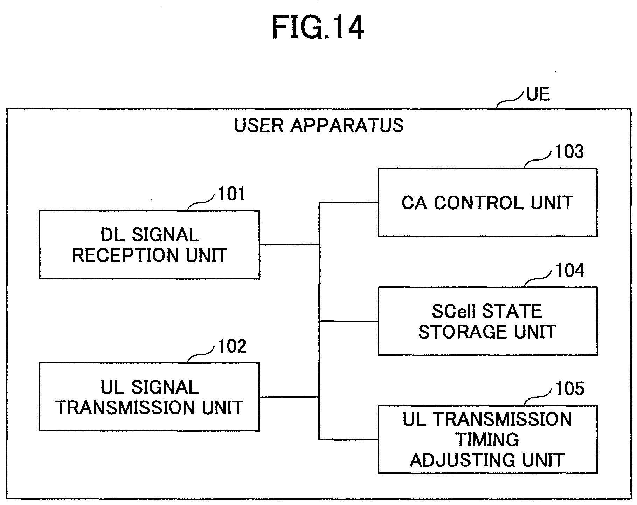

Fig. 14 shows a functional block diagram of a user apparatus UE in the embodiment (including modified examples 1 and 2) of the present invention. As shown in Fig. 14, the user apparatus UE includes a DL signal reception unit 101, an UL signal transmission unit 102, a CA control unit 103, an SCell state storage unit 104, and an UL transmission timing adjustment unit 105. Fig. 14 only shows functional units especially related to the present invention in the user apparatus UE, and the user apparatus UE also includes at least functions, not shown in the figure, for performing operation complying with LTE. Also, the configuration shown in Fig. 14 is merely an example, and, any function segmentations and any names of functional units can be used as long as the user apparatus UE includes functions that can execute processing described in the present embodiment. The following "base station eNB" is used widely including meaning of eNB that does not form DC, and MeNB, SeNB that form DC.

The DL signal reception unit 101 receives various downlink signals from the base station eNB. The UL signal transmission unit 102 transmits various uplink signals to a base station eNB. Also, the DL signal reception unit 101 and the UL signal transmission unit 102 include functions for performing communication by CA (including DC) using a plurality of CCs.

The CA control unit 103 performs control on CA in the user apparatus UE such as management (including storing SCell state into the SCell state storage unit 104) of PCell and SCells (including PSCell, special SCell) that form CA (including DC), addition/deletion of SCell based on an instruction from the base station eNB, setting/change of UL/DL configuration, activation/deactivation of SCells, and the like.

The SCell state storage unit 104 stores an SCell state. Especially, the SCell state storage unit 104 stores at least, necessary information for determining NTAoffset in TA control, such as information (ID and the like) of SCells belonging to an sTAG, configuration (presence or absence of UL/DL setting, PSCell/special SCell or not, and the like) of SCells, activation/deactivation state of SCells and the like.

The UL transmission timing adjustment unit 105 performs TA control, that is, UL transmission timing adjustment based on a TA value received from the base station eNB, and an NTAoffset value determined based on the state stored in the SCell state storage unit 104. By the way, in a TAG, as DL signal reception timing used as a reference of UL signal transmission timing of each cell, for example, DL signal reception timing of a timing reference cell in the TAG can be used. Also, the UL transmission timing adjustment unit 105 also includes a function for performing before-mentioned UL transmission stop control.

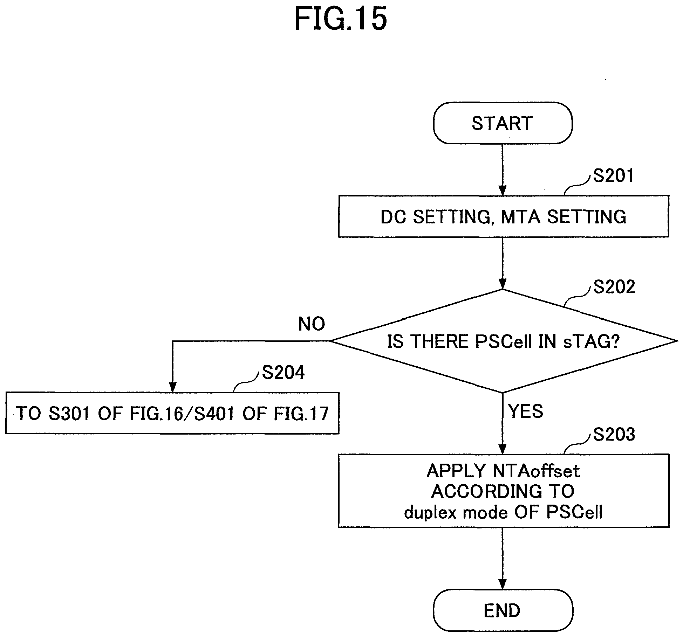

Next, operation examples of the user apparatus UE are described with reference to Figs. 15-17. In the following operation examples, although the user apparatus UE communicates with the base station eNB (MeNB or SeNB), similar control can be applied when the user apparatus UE performs communication with another user apparatus as described in the modified example 2.

In Fig. 15, first, the CA control unit 103 performs setting of SCells (including PSCell) based on an RRC signaling from the base station MeNB, and MTA(sTAG, pTAG and the like) is set. Information on the set SCells is stored in the SCell state storage unit 104 (step 201).

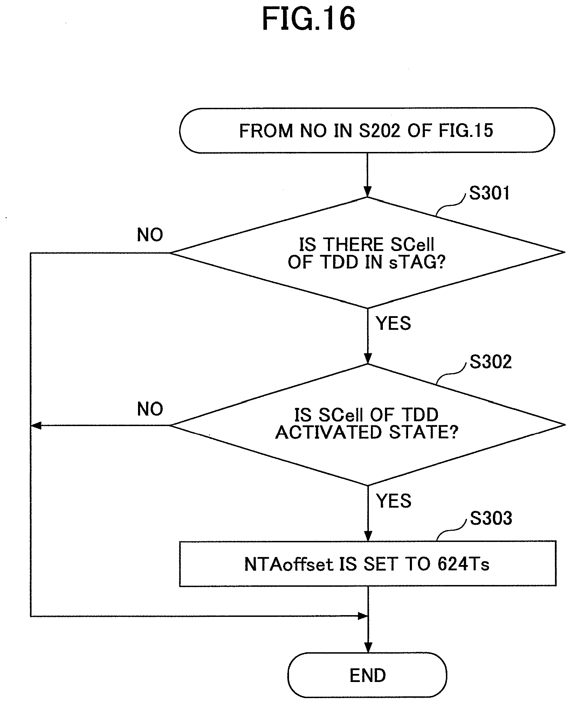

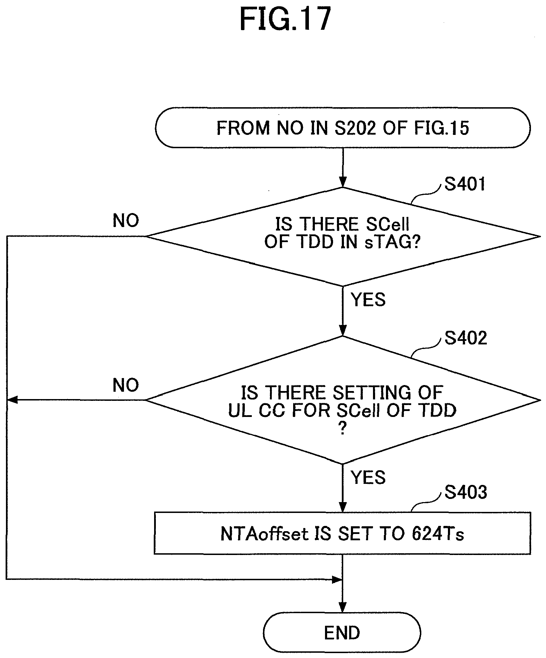

The UL transmission timing adjustment unit 105 refers to the SCell state storage unit 104 to determine whether there is a PSCell in the sTAG (step 202), and when there is the PSCell in the sTAG, the process goes to step 203. When there is not the PSCell, the process goes to step 204. In step 203, the UL transmission timing adjustment unit 105 performs UL transmission timing adjustment by applying NTAoffset according to duplex mode of PSCell in the sTAG. In step 204, for example, the process goes to step 301 of Fig. 16 or step 401 of Fig. 17, so that it is determined whether to apply NTAoffset=624Ts by the before-mentioned determination processing, then, UL transmission timing adjustment is performed. Fig. 16 corresponds to the condition example 2, and Fig. 17 corresponds to the condition example 3. When NTAoffset=624Ts is not applied, NTAoffset=0 is applied.

In step 301 of Fig. 16, the UL transmission timing adjustment unit 105 refers to the SCell state storage unit 104 to determine whether there is an SCell of TDD in the sTAG, and when there is the SCell in the sTAG, the process goes to step 302. In step 302, the UL transmission timing adjustment unit 105 refers to the SCell state storage unit 104 to determine whether there is an SCell of an activated state in the SCell(s) of TDD in the sTAG. When there is the SCell, the process goes to step 303. In step 303, the UL transmission timing adjustment unit 105 performs UL transmission timing adjustment by applying NTAoffset=624Ts in the sTAG.

In step 401 of Fig. 17, the UL transmission timing adjustment unit 105 refers to the SCell state storage unit 104 to determine whether there is an SCell of TDD in the sTAG, and when there is the SCell of TDD, the process goes to step 402. In step 402, the UL transmission timing adjustment unit 105 refers to the SCell state storage unit 104 to determine whether there is an SCell configured with UL CC in the SCell(s) of TDD in the sTAG. When there is the SCell, the process goes to step 403. In step 403, the UL transmission timing adjustment unit 105 performs UL transmission timing adjustment by applying NTAoffset=624Ts in the STAG.

Operation of the condition example 4 to which NTAoffset=624Ts is applied can be executed by replacing the condition of step 402 with "whether there is an SCell that is configured with UL CC and that is in an activated state in the SCell(s) of TDD".

As described above, according to an embodiment of the present invention, there is provided a user apparatus including a function configured to perform communication with another communication apparatus by carrier aggregation using a carrier having a particular frame structure and a carrier having a frame structure different from the particular frame structure, including:
a signal transmission unit configured to transmit an uplink signal to the communication apparatus;
a signal reception unit configured to receive a downlink signal from the communication apparatus; and
a timing adjustment unit configured to perform timing control for shifting forward transmission timing of the uplink signal to the communication apparatus transmitted from the signal transmission unit on the basis of reception timing of the downlink signal from the communication apparatus received by the signal reception unit,
wherein, when there is a secondary cell to which a physical uplink control channel is set in a cell group including secondary cells using a same uplink transmission timing in cells used for the carrier aggregation, the timing adjustment unit performs the timing control on the cell group by using an offset value according to a frame structure of the secondary cell.

According to above-mentioned configuration, it becomes possible to properly apply an offset value, in uplink signal transmission timing control of a user apparatus including a function for performing communication with another communication apparatus by carrier aggregation using a carrier having a particular frame structure and a carrier having a frame structure different from the particular frame structure.

The secondary cell to which the physical uplink control channel is set is a PSCell in dual connectivity, for example. According to this configuration, since the offset value can be determined based on a frame structure of the PSCell in the cell group, the processing can be simplified.

For example, when there is not a secondary cell to which a physical uplink control channel is set in the cell group, the timing adjustment unit determines whether a secondary cell using the carrier having the particular frame structure satisfies a predetermined condition or not in the cell group, and, when the predetermined condition is satisfied, the timing adjustment unit uses a predetermined offset value in the timing control for the cell group. According to this configuration, in a case where there is no secondary cell, in the cell group, to which a physical uplink control channel is set, it becomes possible to properly apply an offset value.

The predetermined condition is, for example, that the secondary cell using the carrier having the particular frame structure is in an activated state. According to this configuration, since the predetermined offset value is applied in an activated state, it can be avoided to uselessly apply an offset value.

The predetermined condition may be that uplink communication is set in the secondary cell using the carrier having the particular frame structure. According to this configuration, since the predetermined offset value is applied when uplink communication is set, it can be avoided to uselessly apply an offset value.

When the predetermined offset value is used for the timing control, the signal transmission unit may notify the communication apparatus that the predetermined offset value is used. According to this configuration, the communication apparatus (example: base station) can ascertain that the predetermined offset value is used so as to be able to properly perform UL signal reception control.

When the predetermined offset value is not used for the timing control, the signal transmission unit may notify the communication unit that the predetermined offset value is not used. According to this configuration, the communication apparatus (example: base station) can ascertain that the predetermined offset value is not used so as to be able to properly perform UL signal reception control.

The timing adjustment unit may include a function configured to stop uplink signal transmission from the signal transmission unit in the cell group when the secondary cell using the carrier having the particular frame structure satisfies the predetermined condition, or a function configured to stop uplink signal transmission from the signal transmission unit in the cell group when the secondary cell using the carrier having the particular frame structure does not satisfy the predetermined condition. By providing these functions, a partner communication apparatus (example: base station) can properly perform UL signal reception processing even though the partner communication apparatus does not have the function for determine applying/not-applying of the offset value in the cell group.

The communication apparatus is, for example, a base station supporting dual connectivity or another user apparatus that performs D2D communication with the user apparatus. Accordingly, an effect can be obtained in that, an offset value can be properly applied not only in DC but also in D2D communication.

The functional configuration of the user apparatus UE described in the present embodiment may be realized, in the user apparatus UE including a CPU and a memory, by executing a program by the CPU (processor), or may be realized by hardware such as a hardware circuit provided with a logic of processing described in the present embodiment, or the program and the hardware may coexist.

Also, the base station eNB (eNB, MeNB, SeNB) described in the present embodiment may be realized, in the base station eNB including a CPU and a memory, by executing a program by the CPU (processor), or may be realized by hardware such as a hardware circuit provided with a logic of processing described in the present embodiment, or the program and the hardware may coexist.

In the above, the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE has been explained by using functional block diagrams. However, such apparatus may be implemented in hardware, software, or a combination thereof. The software executed by a processor provided in the user apparatus UE according to the embodiment of the present invention, and software executed by a processor provided in the base station may be respectively stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present patent application claims priority based on Japanese patent application No. 2014-157065, filed in the JPO on July 31, 2014, and the entire contents of the Japanese patent application No. 2014-157065 are incorporated herein by reference.

### DESCRIPTION OF REFERENCE SIGNS

- eNB, MeNB, SeNB: base station
- UE: user apparatus
- 101: DL signal reception unit
- 102: UL signal transmission unit
- 103: CA control unit
- 104: SCell state storage unit
- 105: UL transmission timing adjustment unit

## Claims

1. A user apparatus including a function configured to perform communication with another communication apparatus by carrier aggregation using a carrier having a particular frame structure and a carrier having a frame structure different from the particular frame structure, comprising:
a signal transmission unit configured to transmit an uplink signal to the communication apparatus;
a signal reception unit configured to receive a downlink signal from the communication apparatus; and
a timing adjustment unit configured to perform timing control for shifting forward transmission timing of the uplink signal to the communication apparatus transmitted from the signal transmission unit on the basis of reception timing of the downlink signal from the communication apparatus received by the signal reception unit,
wherein, when there is a secondary cell to which a physical uplink control channel is set in a cell group including secondary cells using a same uplink transmission timing in cells used for the carrier aggregation, the timing adjustment unit performs the timing control on the cell group by using an offset value according to a frame structure of the secondary cell.

2. The user apparatus as claimed in claim 1, wherein the secondary cell to which the physical uplink control channel is set is a PSCell in dual connectivity.

3. The user apparatus as claimed in claim 1 or 2, wherein, when there is not a secondary cell to which a physical uplink control channel is set in the cell group, the timing adjustment unit determines whether a secondary cell using the carrier having the particular frame structure satisfies a predetermined condition or not in the cell group, and, when the predetermined condition is satisfied, the timing adjustment unit uses a predetermined offset value in the timing control for the cell group.

4. The user apparatus as claimed in claim 3, wherein the predetermined condition is that the secondary cell using the carrier having the particular frame structure is in an activated state.

5. The user apparatus as claimed in claim 3 or 4, wherein the predetermined condition is that uplink communication is set in the secondary cell using the carrier having the particular frame structure.

6. The user apparatus as claimed in any one of claims 3-5, wherein, when the predetermined offset value is used for the timing control, the signal transmission unit notifies the communication apparatus that the predetermined offset value is used.

7. The user apparatus as claimed in claim 6, wherein, when the predetermined offset value is not used for the timing control, the signal transmission unit notifies the communication apparatus that the predetermined offset value is not used.

8. The user apparatus as claimed in any one of claims 3-7, wherein the timing adjustment unit includes a function configured to stop uplink signal transmission from the signal transmission unit in the cell group when the secondary cell using the carrier having the particular frame structure satisfies the predetermined condition, or a function configured to stop uplink signal transmission from the signal transmission unit in the cell group when the secondary cell using the carrier having the particular frame structure does not satisfy the predetermined condition.

9. The user apparatus as claimed in any one of claims 1-8, wherein the communication apparatus is a base station supporting dual connectivity or another user apparatus that performs D2D communication with the user apparatus.

10. An uplink transmission timing control method executed by a user apparatus including a function configured to perform communication with another communication apparatus by carrier aggregation using a carrier having a particular frame structure and a carrier having a frame structure different from the particular frame structure, comprising:
a timing adjustment step of performing timing control for shifting forward transmission timing of an uplink signal to the communication apparatus on the basis of reception timing of a downlink signal from the communication apparatus,
wherein, in the timing adjustment step, when there is a secondary cell to which a physical uplink control channel is set in a cell group including secondary cells using a same uplink transmission timing in cells used for the carrier aggregation, the user apparatus performs the timing control on the cell group by using an offset value according to a frame structure of the secondary cell.
